# EUROPÄISCHE PATENTANMELDUNG

(11) **EP 2 455 838 A1**
(43) Veröffentlichungstag der Anmeldung: **23.05.2012**
(21) Anmeldenummer: 10191859.7
(22) Anmeldetag: 19.11.2010
(51) Int. Cl.: G06F 1/32, H04L 12/12, H04L 12/40

(54) **Netzwerkkomponente und Energiesparmodul**

(71) Anmelder: SIEMENS AKTIENGESELLSCHAFT, 80333 München (DE)
(72) Erfinder: Schäffler, Andreas, 76131, Karlsruhe (DE); Hack, Heiko, 91301, Forchheim (Kersbach) (DE); Kistner, Timo, 76456, Kuppenheim (DE)

(57) **Zusammenfassung**

Die Erfindung betrifft eine Netzwerkkomponente (100) für ein Automatisierungssystem mit einem Anschluss (142) für ein Netzteil (140), einen Aufnahmeschacht (116) für ein Energiesparmodul (180) und einer in dem Aufnahmeschacht angeordneten Schnittstelle (126) für das Energiesparmodul, wobei die Netzwerkkomponente dazu ausgebildet ist, über den Anschluss von dem Netzteil mit einer elektrischen Betriebsspannung und einem elektrischen Strom versorgt zu werden, wobei die Netzwerkkomponente dazu ausgebildet ist, über die Schnittstelle von dem Energiesparmodul von einem ersten in einen zweiten Zustand und umgekehrt geschaltet zu werden, wobei die Netzwerkkomponente dazu ausgebildet ist, im ersten Zustand mit einem geringeren elektrischen Strom als im zweiten Zustand versorgt zu werden, und wobei der Aufnahmeschacht so ausgebildet ist, dass das Energiesparmodul mit der Schnittstelle verbunden ist, wenn sich das Energiesparmodul im Aufnahmeschacht befindet.

## Beschreibung

Die Erfindung betrifft eine Netzwerkkomponente für ein Automatisierungssystem, insbesondere eine Netzwerkkomponente mit einem optional einbaubaren Energiesparmodul.

Netzwerkkomponenten in Automatisierungssystemen werden häufig im Dauerbetrieb eingesetzt. Eine Energie-Einsparung wird teilweise durch Deaktivierung einzelner Ports erreicht. Die Leistungsaufnahme der Netzwerkkomponenten wird dadurch jedoch nur in beschränktem Umfang gemindert. Alternativ können Netzwerkkomponenten komplett abgeschaltet werden. Dies kann jedoch nur durch Abschalten der Hardware direkt an der Netzwerkkomponente geschehen.

Demgegenüber liegt der Erfindung die Aufgabe zugrunde, eine verbesserte Netzwerkkomponente, ein verbessertes Energiesparmodul, ein verbessertes System daraus und ein verbessertes Verfahren zum Betrieb einer Netzwerkkomponente und eines Energiesparmoduls zu schaffen.

Diese Aufgabe wird durch die Netzwerkkomponente, das Energiesparmodul, das System und das Verfahren nach den unabhängigen Patentansprüchen gelöst. Ausführungsformen der Erfindung sind in den abhängigen Patentansprüchen gegeben.

Die Erfindung betrifft eine Netzwerkkomponente für ein Automatisierungssystem mit einem Anschluss für ein Netzgerät, einem Aufnahmeschacht für das Energiesparmodul und einer Schnittstelle für das Energiesparmodul in dem Aufnahmeschacht. Das Energiesparmodul lässt sich also einfach in den Aufnahmeschacht einführen oder herausnehmen. Zusätzlich kann das Energiesparmodul in dem Aufnahmeschacht fixiert werden. Die Fixierung kann beispielsweise durch Schrauben erfolgen. Wenn das Energiesparmodul korrekt in den Aufnahmeschacht eingeführt wurde, wird automatisch eine Verbindung zwischen dem Energiesparmodul und der Netzwerkkomponente über die Schnittstelle hergestellt.

Die Netzwerkkomponente ist dazu ausgebildet, über den Anschluss von dem Netzgerät mit einer elektrischen Betriebsspannung und einem elektrischen Strom versorgt zu werden. Ferner ist die Netzwerkkomponente dazu ausgebildet, über die Schnittstelle von dem Energiesparmodul von einem ersten in einen zweiten Zustand und umgekehrt geschaltet zu werden. Im ersten Zustand wird die Netzwerkkomponente mit einem geringeren elektrischen Strom als zweiten Zustand versorgt. Der erste Zustand kann also auch als Energiesparzustand bezeichnet werden.

Der Aufnahmeschacht ist dabei so ausgebildet, dass das Energiesparmodul mit der Schnittstelle verbunden ist, wenn sich das Energiesparmodul im Aufnahmeschacht befindet. Dies ermöglicht also einen besonders einfachen Ein- und Ausbau eines Energiesparmoduls in die Netzwerkkomponente. Somit ist die Netzwerkkomponente leicht und kostensparend um die Energiesparfunktion erweiterbar. Ausführungsformen der Erfindung sind vorteilhaft, da kostengünstig zwei verschiedene Ausführungsformen der Netzwerkkomponente herstellbar sind. Die Netzwerkkomponente kann als günstige Variante ohne Energiesparmodul und als teurere Variante mit Energiesparmodul angeboten werden. Die günstige Variante ist dann leicht mit einem Energiesparmodul um die Energiesparfunktion erweiterbar.

Ein Automatisierungssystem kann z.B. als industrielles Automatisierungssystem ausgebildet sein. Solche industriellen Automatisierungssysteme können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungssysteme bzw. industrielle Automatisierungssysteme Echzeit-Kommunikationsprotokolle (z.B. Profinet, Profibus, Real-Time-Ethernet) zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungssystem bzw. industriellen Automatisierungssystem vorgesehen sein, z.B. zum Überwachen, Einrichten, Umprogrammieren oder/oder Umparametrieren einer oder mehrerer Steuerungseinheiten im Automatisierungssystem.

Ein Automatisierungssystem kann z.B. drahtgebundene Kommunikation und/oder drahtlose Kommunikation umfassen.

Eine Netzkomponente kann beispielsweise ein Computer, PC und/oder Controller mit Steuerungs-Aufgaben bzw. Steuerungs-Fähigkeiten sein. Insbesondere kann eine Netzkomponente beispielsweise eine industrielle Netzkomponente sein, die z.B. speziell zur Steuerung und/oder Regelung industrieller Anlagen ausgebildet, eingerichtet und/oder vorgesehen sein kann. Insbesondere können solche Netzkomponenten bzw. industriellen Netzkomponenten echtzeitfähig sein, d.h. eine Steuerung bzw. Regelung in Echtzeit ermöglichen. Dazu kann die Netzkomponente bzw. die industrielle Netzkomponente z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine Netzkomponente kann auch ein Schalt-Netzknoten, Switch oder Hub sein. Eine solche Netzkomponente weist mehrere Netzwerkanschlüsse auf und leitet Daten im Automatisierungssystem weiter. Eine solche Netzkomponente kann also Daten von einer anderen Komponente des Automatisierungssystems empfangen und an eine weitere Komponente des Automatisierungssystems ausgeben.

Eine Netzkomponente kann auch z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Nach Ausführungsformen der Erfindung umfasst die Netzwerkkomponente eine Steuerungseinheit. Die Steuerungseinheit ist dazu ausgebildet, ein erstes Signal über die Schnittstelle an das Energiesparmodul auszugeben, wenn ein erstes Kriterium erfüllt ist. Ein zweites Signal wird vom Energiesparmodul über die Schnittstelle an die Netzwerkkomponente ausgegeben, wenn ein zweites Kriterium erfüllt ist. Das erste Signal signalisiert dabei, dass die Netzwerkkomponente in den ersten Zustand geschaltet werden soll und das zweite Signal signalisiert, dass die Netzwerkkomponente in den zweiten Zustand geschaltet werden soll.

Mit anderen Worten kann die Steuerungseinheit Signale an das Energiesparmodul ausgeben, wenn bestimmte Ereignisse eintreten. Das Energiesparmodul schaltet dann die Netzwerkkomponente in den entsprechenden Zustand.

Nach Ausführungsformen der Erfindung ist das erste Kriterium ein Auslastungsschwellwert. Der Schwellwert bezieht sich auf die Auslastung der Netzwerkkomponente, die durch die Steuerungseinheit gemessen wird. Die Auslastung der Netzwerkkomponente meint hier insbesondere die Netzlast. Die Auslastung bzw. die Netzlast kann durch die Steuerungseinheit durch eine Messung der Belegung der Netzwerkanschlüsse der Netzwerkkomponente gemessen werden. Wenn also beispielsweise die Netzwerkkomponente relativ viele Daten weiterleitet, ist die Auslastung der Netzwerkkomponente hoch. Wenn hingegen die Netzwerkkomponente nur wenige Signale oder Daten weiterleitet, ist die Auslastung der Netzwerkkomponente relativ niedrig. Die Auslastung kann beispielsweise durch eine Messung einer Anzahl oder eines Anteils der für die Netzwerkkommunikation verwendeten Netzwerkanschlüsse erfolgen.

Die Steuerungseinheit kann ferner Aufzeichnungen über die Auslastung der Netzwerkkomponente vornehmen und in einem Speicher speichern. Das erste Kriterium kann dann neben dem ersten Auslastungsschwellwert eine Zeitspanne umfassen. Das erste Signal wird dann erst von der Steuerungseinheit an das Energiesparmodul ausgegeben, wenn der erste Auslastungsschwellwert für die Zeitspanne unterschritten wird.

Wenn sich die Netzwerkkomponente im ersten Zustand, also dem Energiesparzustand, befindet, wird das Energiesparmodul durch das Netzgerät oder ein zusätzliches Netzgerät mit Energie versorgt. Eine Reaktivierung kann beispielsweise dann erfolgen, wenn andere Komponenten im Netzwerk eine Reaktivierung der Netzwerkkomponente auslösen. Dies kann beispielsweise durch ein sogenanntes Wake-on-LAN-Signal erfolgen. Das Wake-on-LAN-Signal wird von einer weiteren Komponente des Netzwerks an die Netzwerkkomponente mit dem Energiesparmodul gesendet und vom Energiesparmodul empfangen. Das Wake-on-LAN-Signal löst dann eine Reaktivierung der Netzwerkkomponente aus.

Nach Ausführungsformen der Erfindung ist die Steuerungseinheit zur Auswertung einer Auslastungsstatistik der Netzwerkkomponente ausgebildet. Die Steuerungseinheit ist ferner dazu ausgebildet, das erste und das zweite Kriterium unter Berücksichtigung der Auslastungsstatistik zu bestimmen. Die Auslastungsstatistik kann durch die Steuerungseinheit und/oder durch externe Komponenten gespeichert werden. Die Auslastungsstatistik hätte beispielsweise Informationen über die Auslastung der Netzwerkkomponente zu bestimmten Tageszeiten zu bestimmten Wochentagen. Beispielsweise kann die Auslastungsstatistik in Abhängigkeit von den Wochentagen oder unabhängig von den Wochentagen, d.h. lediglich abhängig von der Tageszeit, geführt werden. In Betrieben, in denen am Wochenende keine Produktion stattfindet, kann die Auslastungsstatistik unter Berücksichtigung der Wochentage beispielsweise dazu führen, dass die Netzwerkkomponente freitagnachmittags nach Schluss der letzten Schicht bis montagmorgens kurz vor Anfang der ersten Schicht deaktiviert, d.h. in den ersten Zustand geschaltet, wird. Somit wird für Samstag und Sonntag Energie gespart. In Betrieben mit Wochenendarbeit kann die Auslastungsstatistik beispielsweise nur Tageszeiten umfassen. In diesem Falle kann die Netzwerkkomponente beispielsweise immer zu den gleichen Tages- oder Nachtzeiten in den ersten Zustand geschaltet werden.

Das erste und das zweite Kriterium können also von der Steuerungseinheit bestimmt werden. Auch die Auslastungsschwellwerte können anhand der Auslastungsstatistik durch die Steuerungseinheit bestimmt werden. Beispielsweise kann der erste Schwellwert so bestimmt werden, dass die Schaltung der Netzwerkkomponente in den ersten und zweiten Zustand an die Anforderungen angepasst wird.

Nach Ausführungsformen der Erfindung ist das erste Kriterium die Erreichung eines ersten Zeitpunkts und das zweite Kriterium die Erreichung eines zweiten Zeitpunkts. Mit anderen Worten wird die Netzwerkkomponente durch das Energiesparmodul nach einem Zeitplan in den ersten oder zweiten Zustand geschaltet. Beispielsweise wird das Energiesparmodul um 18 Uhr dazu veranlasst, die Netzwerkkomponente in den ersten Zustand zu schalten und um 6 Uhr morgens in den zweiten Zustand zu schalten. Somit wird über Nacht Energie gespart.

In einem weiteren Aspekt betrifft die Erfindung ein Energiesparmodul mit einer Schnittstelle zum Anschluss an eine Netzwerkkomponente. Das Energiesparmodul ist dazu ausgebildet, die Netzwerkkomponente von einem ersten in einen zweiten Zustand und umgekehrt zu schalten. Der erste Zustand ist ein Energiesparzustand und der zweite Zustand ein Betriebszustand. Im Energiesparzustand wird weniger Energie verbraucht als im Betriebszustand. Das Energiesparmodul wird dabei unabhängig vom Zustand der Netzwerkkomponente von einer Betriebsspannung versorgt. Das Energiesparmodul ist also weiterhin mit einer Betriebsspannung versorgt, auch wenn sich die Netzwerkkomponente im Energiesparzustand befindet.

Nach Ausführungsformen der Erfindung ist das Energiesparmodul dazu ausgebildet, ein erstes Signal über die Schnittstelle an das Energiesparmodul auszugeben, wenn ein erstes Kriterium erfüllt ist. Außerdem ist das Energiesparmodul dazu ausgebildet, ein zweites Signal über die Schnittstelle an die Netzwerkkomponente auszugeben, wenn ein zweites Kriterium erfüllt ist. Das erste Signal ist dabei hinweisend darauf, dass die Netzwerkkomponente in den ersten Zustand geschaltet wird und das zweite Signal ist ein Hinweis darauf, dass die Netzwerkkomponente in den zweiten Zustand geschaltet wird.

Das erste Kriterium kann beispielsweise das Unterschreiten eines Auslastungsschwellwertes der Netzwerkkomponente sein. Mit anderen Worten wird die Netzwerkkomponente in den Energiesparzustand geschaltet, wenn die Auslastung der Netzwerkkomponente den Auslastungsschwellwert unterschreitet. Alternativ kann die Schaltung der Netzwerkkomponente in den Energiesparzustand auch erst dann erfolgen, wenn der Auslastungsschwellwert für eine bestimmte Zeitspanne unterschritten wird. Die Schaltung der Netzwerkkomponente in den zweiten Zustand kann beispielsweise nach Ablauf einer zweiten Zeitspanne erfolgen. Mit anderen Worten wird die Netzwerkkomponente in diesem Fall immer für eine bestimmte Zeit in den Energiesparzustand geschaltet.

Das zweite Kriterium kann alternativ auch der Empfang eines Wake-on-LAN-Signals durch das Energiesparmodul sein. Beim Empfang des Wake-on-LAN-Signals wird die Netzwerkkomponente von dem Energiesparmodul wieder in den Betriebszustand geschaltet. Das Wake-on-LAN-Signal kann beispielsweise von einer weiteren Netzwerkkomponente des Automatisierungssystems an das Energiesparmodul gesendet worden sein. Vorzugsweise erfolgt die Schaltung der Netzwerkkomponente in den zweiten Zustand durch Empfang des Wake-on-LAN-Signals dann, wenn die Kapazitäten der Netzwerkkomponente im Automatisierungssystem benötigt werden. Der Empfang des Wake-on-LAN-Signals durch das Energiesparmodul kann beispielsweise durch einen Netzwerkanschluss des Energiesparmoduls erfolgen.

Nach Ausführungsformen der Erfindung ist der Netzwerkanschluss des Energiesparmoduls in der Schnittstelle für die Netzwerkkomponente integriert. Das Energiesparmodul wird also über die Netzwerkkomponente mit dem Automatisierungssystem verbunden.

Nach Ausführungsformen der Erfindung weist das Energiesparmodul einen Anschluss für ein Netzgerät auf und ist dazu ausgebildet, von dem Netzgerät mit der Betriebsspannung versorgt zu werden. Die Versorgung des Energiesparmoduls mit der Betriebsspannung erfolgt also unabhängig vom Betriebszustand oder Energiesparzustand der Netzwerkkomponente. Das Netzgerät kann hierbei das gleiche Netzgerät wie für die Netzwerkkomponente oder ein zusätzliches Netzgerät sein.

Nach Ausführungsformen der Erfindung wird das Energiesparmodul über die Schnittstelle mit der Betriebsspannung versorgt. In diesem Fall ist das Netzgerät für die Netzwerkkomponente das gleiche wie das Netzgerät für das Energiesparmodul.

In einem weiteren Aspekt betrifft die Erfindung ein System aus einer Netzwerkkomponente nach Ausführungsformen der Erfindung und einem Energiesparmodul nach Ausführungsformen der Erfindung.

Nach Ausführungsformen der Erfindung umfasst das System ferner mindestens ein Portmodul. Das Portmodul umfasst mindestens eine Anschluss-Schnittstelle zur Ankopplung an das Kommunikationsnetz. Außerdem ist das System zur Weiterleitung von über eine der Anschluss-Schnittstellen eingehende Kommunikationsdaten an mindestens eine weitere der Anschlussstellen ausgebildet und eingerichtet. Die Netzwerkkomponente ist derart ausgebildet und eingerichtet, dass mindestens eines der Portmodule gegen das Energiesparmodul zur Erweiterung der Funktionalität des Systems austauschbar ist. Mit anderen Worten ist ein Portmodul gegen das Energiesparmodul frei austauschbar, was die Flexibilität der Netzwerkkomponente erhöht. Beispielsweise kann eine Netzwerkkomponente mit einem Portmodul und einem Energiesparmodul verbunden sein, wodurch eine Energiesparfunktion für die Netzwerkkomponente erreicht wird. Alternativ kann das Energiesparmodul durch ein weiteres Portmodul ersetzt werden, wodurch die Kapazität der Netzwerkkomponente erhöht wird.

In noch einem weiteren Aspekt betrifft die Erfindung ein Verfahren zum Betrieb einer Netzwerkkomponente und eines Energiesparmoduls. Die Netzwerkkomponente und das Energiesparmodul werden durch zumindest ein Netzgerät mit einer Betriebsspannung versorgt und das Verfahren umfasst die folgenden Schritte. Zunächst wird die Netzwerkkomponente in einen ersten Zustand geschaltet, wenn ein erstes Kriterium erfüllt wird. Dies geschieht durch das Energiesparmodul. Die Netzwerkkomponente wird in einen zweiten Zustand geschaltet, wenn ein zweites Kriterium erfüllt wird. Auch dies geschieht durch das Energiesparmodul. Im ersten Zustand wird die Netzwerkkomponente durch das zumindest eine Netzgerät mit einem geringeren elektrischen Strom als im zweiten Zustand versorgt. Die Versorgung des Energiesparmoduls mit der Betriebsspannung geschieht unabhängig vom Zustand der Netzwerkkomponente.

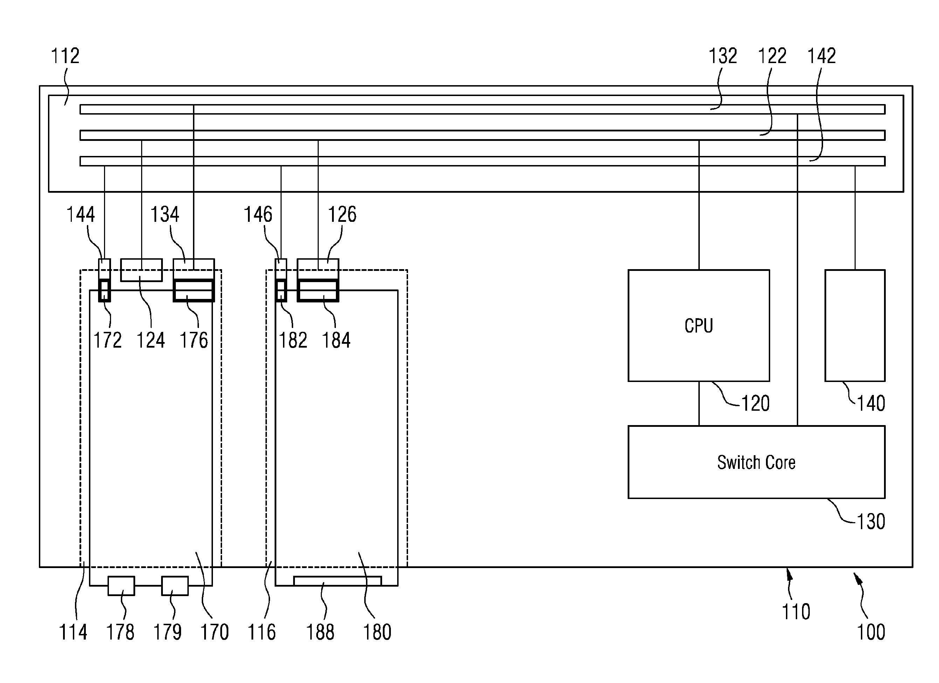

Im Folgenden wird die vorliegende Erfindung beispielhaft mit Bezug auf die beiliegende Figur näher erläutert. Es zeigt
- Figur 1: ein Blockdiagramm einer Netzwerkkomponente mit einem Port-Modul und einem Energiesparmodul.

Figur 1 zeigt eine Netzwerkkomponente 100, die aus einer Basis-Einheit 110, einem darin eingesteckten Port-Modul 170 und einem darin eingesteckten Energiesparmodul 180 besteht.

Die Basiseinheit weist dabei eine so genannte "Backplane" 112 auf, welche einen PCI-Express-Systembus (PCIe-Bus) 122, einen internen Hochgeschwindigkeits-Netzwerkbus 132 und einen Stromversorgungsbus 142 umfasst. Dabei ist der Stromversorgungsbus 142 mit einem Netzgerät 140 verbunden, während der PCI-Express (PCIe)-Bus 122 mit einer Zentraleinheit 120 der Basiseinheit 110 sowie der Hochgeschwindigkeits-Netzwerkbus 132 mit einem zentralen Daten-Weiterleitungs-Funktionsblock 130 ("Switch-Core") verbunden ist. Beispielsweise zum Betrieb oder zur Konfiguration des Switch-Cores 130 ist die Zentraleinheit 120 zudem auch mit dem Switch-Core 130 verbunden.

Die Basiseinheit 110 weist einen ersten Modulschacht 114 auf, in welchem das Portmodul 170 installiert ist. Im Modulschacht 114 ist ein PCIe-Stecker 124, ein Netzwerkstecker 134 sowie ein Stromversorgungsstecker 144 installiert, welcher mit den jeweiligen Bussen der Backplane 112 verbunden sind. Das Portmodul weist einen Netzwerkstecker 176 sowie einen Stromversorgungsstecker 172 im rückwärtigen Bereich zum Einstecken in die entsprechenden Stecker des Modulschachts auf. Weiterhin umfasst das Portmodul 170 eine erste Ethernet-Schnittstelle 178 sowie eine zweite Ethernet-Schnittstelle 179 zum Anschluss von Ethernet-Leitungen. Über die Ethernet-Schnittstelle 178, 179 ankommende Informationen können über die Netzwerk-Bus-Stecker 176 des Moduls und des Modulschachts 134 an den Netzwerkbus 132 sowie an den Switch-Core 130 weitergegeben werden und dann von dort an entsprechende Ports der Netzwerkkomponente 100 weitergeleitet.

In einem zweiten Modulschacht 116 der Basiseinheit 110, welcher wiederum einen PCIe-Stecker 126, einen Netzwerkbus-Stecker 136 sowie einen Stromversorgungsstecker 146 aufweist, ist ein Energiesparmodul 180 installiert. Dieses Energiesparmodul 180 weist einen PCIe-Stecker 184 sowie
einen Stromversorgungsstecker 182 auf, welcher im in Figur 1 dargestellten Aufnahmezustand in die entsprechenden Stecker 126, 146 des zweiten Modulschachts 116 eingesteckt sind.

Das Energiesparmodul 180 ist über die Stecker 182, 146, 184 und 126 mit der Netzwerkkomponente verbunden. Über die Schnittstellen 146 und 182 wird das Energiesparmodul 180 mit einer Betriebsspannung versorgt. Die Betriebsspannung wird vom Netzgerät 140 erzeugt. Das Netzgerät 140 erzeugt ebenfalls die Betriebsspannung für die Netzwerkkomponente 100.

Über die Stecker 184 und 126 kann das Energiesparmodul 180 Signale an die Netzwerkkomponente ausgeben, die von der CPU 120 verarbeitet werden. Das Energiesparmodul 180 kann durch Ausgabe eines ersten Signals beispielsweise die CPU 120 dazu veranlassen, die Netzwerkkomponente 100 in einen Energiesparzustand zu schalten, indem die Netzwerkkomponente 100 weniger Energie verbraucht. Außerdem kann das Energiesparmodul 180 ein zweites Signal an die CPU 120 ausgeben, wodurch die CPU 120 dazu veranlasst wird, die Netzwerkkomponente 100 in einen Betriebszustand zu schalten. Im Betriebszustand verbraucht die Netzwerkkomponente 100 mehr Energie als im Energiesparzustand.

Beispielsweise kann die Schaltung der Netzwerkkomponente 100 in den Energiesparzustand dann erfolgen, wenn die Auslastung der Netzwerkkomponente unter einen Auslastungsschwellwert fällt. Die Auslastung kann beispielsweise durch die CPU 120 gemessen werden. Hierfür kann beispielsweise die Auslastung der Ports 178 und 179 ausgewertet werden. Bei einer hohen Auslastung der Netzwerkkomponente 100 werden viele Daten und Signale über die Ports 178 und 179 empfangen und gesendet. Bei einer relativ niedrigen Auslastung werden wenig Signale und wenig Daten über die Ports 178 und 179 empfangen und gesendet.

Die Schaltung der Netzwerkkomponente 100 in den Energiesparoder Betriebszustand kann auch zeitgesteuert erfolgen. Beispielsweise kann eine Schaltung der Netzwerkkomponente 100 in den Betriebszustand dann erfolgen, wenn die Schaltung in den Energiesparzustand eine bestimmte Zeit bereits her ist. In diesem Fall wird also mit anderen Worten die Netzwerkkomponente 100 immer nach Ablauf einer bestimmten Zeitspanne wieder vom Energiesparzustand in den Betriebszustand geschaltet. Eine Schaltung der Netzwerkkomponente 100 kann auch nach einem Zeitplan erfolgen, in dem die Netzwerkkomponente 100 zu einer bestimmten Tageszeit in den Energiesparzustand und zu einer anderen Tageszeit in den Betriebszustand geschaltet wird.

Alternativ oder zusätzlich kann das Energiesparmodul 180 dazu ausgebildet sein, über die Stecker 126 und 184 ein sogenanntes Wake-on-LAN-Signal von anderen Netzwerkkomponenten zu empfangen. In diesem Fall kann die Netzwerkkomponente 100 über das Energiesparmodul 180 von einer weiteren Netzwerkkomponente im Automatisierungssystem vom Energiesparzustand in den Betriebszustand geschaltet werden. Dies ist beispielsweise dann vorteilhaft, wenn die Auslastung des Netzwerks steigt und die Kapazitäten der Netzwerkkomponente 100 benötigt werden.

### Liste der Bezugszeichen

- 100: Netzwerkkomponente
- 110: Basis-Einheit
- 112: Backplane
- 114: Modulschacht
- 116: Modulschacht
- 120: Zentraleinheit
- 122: PCIe-Bus
- 124: PCIe-Stecker
- 126: PCIe-Stecker
- 130: Switch-Core
- 132: Netzwerkbus
- 134: Netzwerkstecker
- 136: Netzwerkstecker
- 140: Netzgerät
- 142: Stromversorgungsbus
- 144: Stromversorgungsstecker
- 146: Stromversorgungsstecker
- 170: Port-Modul
- 172: Stromversorgungsstecker
- 176: Netzwerkstecker
- 178: Ethernet-Schnittstelle
- 179: Ethernet-Schnittstelle
- 180: Energiesparmodul
- 182: Stromversorungsstecker
- 184: PCIe-Stecker

## Patentansprüche

1. Netzwerkkomponente (100) für ein Automatisierungssystem mit
- einem Anschluss (142) für ein Netzteil (140);
- einen Aufnahmeschacht (116) für ein Energiesparmodul (180); und
- einer in dem Aufnahmeschacht angeordneten Schnittstelle (126) für das Energiesparmodul;
wobei die Netzwerkkomponente dazu ausgebildet ist, über den Anschluss von dem Netzteil mit einer elektrischen Betriebsspannung und einem elektrischen Strom versorgt zu werden,
wobei die Netzwerkkomponente dazu ausgebildet ist, über die Schnittstelle von dem Energiesparmodul von einem ersten in einen zweiten Zustand und umgekehrt geschaltet zu werden,
wobei die Netzwerkkomponente dazu ausgebildet ist, im ersten Zustand mit einem geringeren elektrischen Strom als im zweiten Zustand versorgt zu werden, und
wobei der Aufnahmeschacht so ausgebildet ist, dass das Energiesparmodul mit der Schnittstelle verbunden ist, wenn sich das Energiesparmodul im Aufnahmeschacht befindet.

2. Netzwerkkomponente nach Anspruch 1,
wobei die Netzwerkkomponente eine Steuerungseinheit (130) aufweist,
wobei die Steuerungseinheit dazu ausgebildet ist, ein erstes Signal über die Schnittstelle an das Energiesparmodul auszugeben, wenn ein erstes Kriterium erfüllt ist,
wobei das Energiesparmodul dazu ausgebildet ist, ein zweites Signal über die Schnittstelle an die Netzwerkkomponente auszugeben, wenn ein zweites Kriterium erfüllt ist,
wobei das erste Signal hinweisend darauf ist, die Netzwerkkomponente in den ersten Zustand zu schalten, und
wobei das zweite Signal hinweisend darauf ist, die Netzwerkkomponente in den zweiten Zustand zu schalten.

3. Netzwerkkomponente nach Anspruch 2, wobei die Steuerungseinheit dazu ausgebildet ist, die Auslastung der Netzwerkkomponente zu messen, und wobei das erste Kriterium die Unterschreitung eines ersten Auslastungsschwellwerts ist.

4. Netzwerkkomponente nach Anspruch 2, wobei die Steuerungseinheit zur Auswertung einer Auslastungsstatistik der Netzwerkkomponente ausgebildet ist, und wobei die Steuerungseinheit ferner dazu ausgebildet ist, das erste und das zweite Kriterium unter Berücksichtigung der Auslastungsstatistik zu bestimmen.

5. Netzwerkkomponente nach Anspruch 2, wobei das erste Kriterium die Erreichung eines ersten Zeitpunkts und das zweite Kriterium die Erreichung eines zweiten Zeitpunkts ist.

6. Energiesparmodul (180) mit einer Schnittstelle (184) zum Anschluss an eine Netzwerkkomponente,
wobei das Energiesparmodul dazu ausgebildet ist, die Netzwerkkomponente von einem ersten in einen zweiten Zustand und umgekehrt zu schalten,
wobei der erste Zustand ein Energiesparzustand und der zweite Zustand ein Betriebszustand ist,
und wobei das Energiesparmodul dazu ausgebildet ist, unabhängig vom Zustand der Netzwerkkomponente mit einer Betriebsspannung versorgt zu werden.

7. Energiesparmodul nach Anspruch 6, wobei das Energiesparmodul dazu ausgebildet ist, ein erstes Signal über die Schnittstelle an das Energiesparmodul auszugeben, wenn ein erstes Kriterium erfüllt ist,
wobei das Energiesparmodul dazu ausgebildet ist, ein zweites Signal über die Schnittstelle an die Netzwerkkomponente auszugeben, wenn ein zweites Kriterium erfüllt ist,
wobei das erste Signal signalisiert, die Netzwerkkomponente in den ersten Zustand zu schalten, und
wobei das zweite Signal signalisiert, die Netzwerkkomponente in den zweiten Zustand zu schalten

8. Energiesparmodul nach einem der Ansprüche 6 oder 7,
wobei das Energiesparmodul einen Netzwerkanschluss aufweist,
wobei das Energiesparmodul zum Empfang eines Wake-on-LAN-Signals über den Netzwerkanschluss ausgebildet ist, und
wobei das Energiesparmodul dazu ausgebildet ist, die Netzwerkkomponente vom ersten Zustand in den zweiten Zustand zu schalten, wenn das Energiesparmodul das Wake-on-LAN-Signal empfängt.

9. Energiesparmodul nach Anspruch 8, wobei der Netzwerkanschluss in der Schnittstelle integriert ist.

10. Energiesparmodul nach einem der Ansprüche 6-9, wobei das Energiesparmodul einen Anschluss für ein Netzteil aufweist und dazu ausgebildet ist, von dem Netzteil mit der Betriebsspannung versorgt zu werden.

11. Energiesparmodul nach einem der Ansprüche 6-9, wobei das Energiesparmodul dazu ausgebildet ist, über die Schnittstelle mit der Betriebsspannung versorgt zu werden.

12. System aus einer Netzwerkkomponente nach einem der Ansprüche 1-5 und einem Energiesparmodul nach einem der Ansprüche 6-11.

13. System nach Anspruch 12, wobei das System ferner mindestens ein Port-Modul umfasst,
wobei das mindestens eine Port-Modul mindestens eine Anschluss-Schnittstelle zur Ankopplung an das Kommunikationsnetz aufweist, und
wobei das System zur Weiterleitung von über eine der Anschluss-Schnittstellen eingehende Kommunikationsdaten an mindestens eine weitere der Anschluss-Schnittstellen ausgebildet und eingerichtet ist, **dadurch gekennzeichnet, dass**
die Netzwerkkomponente derart ausgebildet und eingerichtet ist, dass mindestens eines der Port-Modul gegen das Energiesparmodul zur Erweiterung der Funktionalität des Systems austauschbar ist.

14. Verfahren zum Betrieb einer Netzwerkkomponente und eines Energiesparmoduls, wobei die Netzwerkkomponente und das Energiesparmodul durch zumindest ein Netzteil mit einer Betriebsspannung versorgt werden, wobei das Verfahren die folgenden Schritte umfasst:
- Schalten der Netzwerkkomponente in einen ersten Zustand durch das Energiesparmodul, wenn ein erstes Kriterium erfüllt wird;
- Schalten der Netzwerkkomponente in einen zweiten Zustand durch das Energiesparmodul, wenn ein zweites Kriterium erfüllt wird;
wobei die Netzwerkkomponente durch das zumindest eine Netzteil im ersten Zustand mit einem geringeren elektrischen Strom als im zweiten Zustand versorgt wird, und
wobei die Versorgung des Energiesparmoduls mit der Betriebsspannung unabhängig vom Zustand der Netzwerkkomponente erfolgt.
